# EUROPÄISCHE PATENTSCHRIFT

(11) **EP 1 454 807 B1**
(45) Veröffentlichungstag und Bekanntmachung des Hinweises auf die Patenterteilung: **13.12.2006**
(21) Anmeldenummer: 04004837.3
(22) Anmeldetag: 02.03.2004
(51) Int. Cl.: B60R 25/00, G07C 9/00

(54) **Sicherungssystem**
Security system
Système de sécurité

(30) Priorität: 05.03.2003 DE 10309600
(43) Veröffentlichungstag der Anmeldung: 08.09.2004
(73) Patentinhaber: Delphi Technologies, Inc., Troy, MI 48007 (US)
(72) Erfinder: Uttich, Bernd, 51643 Gummersbach (DE); Wiethege, Eric, 51427 Bergisch Gladbach (DE)
(74) Vertreter: Manitz, Finsterwald & Partner GbR

(56) Entgegenhaltungen:
- EP-A- 0 768 764
- EP-A- 1 055 931
- DE-A- 19 820 207
- DE-A- 19 823 122
- US-A- 5 796 180

## Beschreibung

Die Erfindung betrifft ein Sicherungssystem für einen schlüssellosen Zugang, insbesondere für Kraftfahrzeuge, mit einem insbesondere einem Kraftfahrzeug zugeordneten Steuergerät, einer Spannungsversorgung sowie wenigstens einer über zumindest zwei Antennenleiter mit dem Steuergerät verbindbaren Antenne zur Kommunikation mit einer Bedienungseinrichtung über eine insbesondere bidirektionale Funkstrecke, wobei das Steuergerät einen zumindest zwei Eingänge aufweisenden HF-Empfänger umfasst.

Es sind bereits Chipkartensysteme für einen schlüssellosen Zugang (keyless entry) bekannt, bei denen mittels der den Schlüssel ersetzenden Chipkarte beispielsweise die Türen und der Kofferraum des betreffenden Kraftfahrzeugs geöffnet und dessen Motor gestartet werden können. Dabei werden zwischen einem im Kraftfahrzeug integrierten, einen Sender sowie einen Empfänger umfassenden Steuergerät und der Chipkarte Sende- und Antwortsignale gewechselt. Bevor eine jeweilige Funktion ausgeführt werden kann, wird der von der Chipkarte übermittelte Identifikationscode überprüft.

Bisher wurde für eine jeweilige Diagnose der Antenne die reflektierte Welle bei der Betriebsfrequenz der Antenne gemessen bzw. das so genannte Stehwellenverhältnis SWR (standing wave ratio) bestimmt. Eine entsprechende Messung kann beispielsweise über einen Richtkoppler oder dergleichen erfolgen. Eine solche Vorgehensweise ist nun aber insbesondere für den Kraftfahrzeugbereich zu komplex und aufwändig.

In der EP-A-1 055 931 wird eine Schaltungsanordnung zum Prüfen der Funktionsbereitschaft einer Antenne für ein Funktelefon eines Fahrzeugs beschrieben. Dabei sind zwei Antennenleiter an das Funktelefon angeschlossen. Ein Anschluss eines Sende/ Empfangsteils RF des Funktelefons ist über einen Kondensator mit einem ersten Antennenleiter verbunden. Der zweite Antennenleiter liegt an beiden Enden jeweils auf Masse. An den betreffenden Signalkontakt des ersten Antennenleiters sind über einen jeweiligen Widerstand eine Spannungsquelle und ein Eingang eines Spannungsauswerters angeschlossen. Die als Stabstrahler ausgeführte Antenne ist direkt mit einem Nebenpfad verbunden, der eine Impedanz bestehend aus einem Widerstand aufweist und den Stromkreis für den über den Quellenwiderstand zugeführten Prüfstrom vom Stabstrahler zum Massekontakt schließt. Die Impedanz bildet mit dem Quellenwiderstand einen Spannungsteiler, wobei der Wert des die Impedanz bildenden Widerstandes vorzugsweise gleich dem Wert des Quellenwiderstandes ist. Der Prüfstrom erzeugt an der Impedanz eine Prüfspannung, die bei fehlender oder nicht angeschlossener Antenne gleich der Quellenspannung ist. Der Spannungsauswerter vergleicht die Prüfspannung mit einer Referenzspannung und liefert einer Steuerschaltung des Funktelefons ein entsprechendes Indikationssignal.

Aus der DE-A-198 23 122 ist eine multifunktionale Telefonanlage für Kraftfahrzeuge mit integriertem Sicherungssystem für einen schlüssellosen Zugang nach dem Oberbegriff des Anspruchs 1 bekannt.

Der Erfindung liegt die Aufgabe zugrunde, ein verbessertes Sicherungssystem der eingangs genannten Art zu schaffen, das auf möglichst einfache und zuverlässige Weise eine Selbstdiagnose oder -überwachung des Anschlusszustandes der Antenne gestattet.

Diese Aufgabe wird nach der Erfindung dadurch gelöst, dass ein erster Antennenleiter mit einem ersten Eingang des HF-Empfängers und ein zweiter Antennenleiter sowohl über einen Hoch- oder Bandpass und/oder eine Schaltereinrichtung mit einem zweiten Eingang des HF-Empfängers als auch mit einer Schaltungsanordnung des Steuergeräts verbindbar ist, über die die Antenne zur Überwachung des Antennen-Anschlusszustandes mit einer Gleichspannung und/oder einem Gleichstrom beaufschlagbar ist, und dass das Steuergerät Mittel für eine Gleichspannungs- und/oder Gleichstrommessung sowie Mittel zur Auswertung des Messergebnisses umfasst, um anhand dieses Messergebnisses auf den jeweiligen Anschlusszustand der Antenne zu schließen, wobei der zweite Antennenleiter an seinem der Antenne zugewandten Ende mit Masse bzw. mit einer Klemme der Spannungsversorgung verbunden ist, und die Schaltungsanordnung einen Pull-up-Widerstand, über den das mit der Schaltungsanordnung verbundene Ende des zweiten Antennenleiters mit der anderen Klemme der Spannungsversorgung verbindbar ist, sowie einen Pull-down-Widerstand umfasst, über den das mit der Schaltungsanordnung verbundene Ende des zweiten Antennenleiters mit Masse verbindbar ist.

Über die Gleichspannungs- bzw. Gleichstrommessung ist auf relativ einfache Weise eine zuverlässige Selbstdiagnose der HF-Antenne möglich, mit der zum Beispiel festgestellt werden kann, ob die Antenne mit dem Steuergerät und dem Kraftfahrzeug verbunden oder gegenüber zum Beispiel der positiven Klemme der betreffenden Versorgung, zum Beispiel der Kraftfahrzeugbatterie, kurzgeschlossen ist. Bisher war im Kraftfahrzeugbereich eine Diagnose der HF-Antenne angesichts der hohen Kosten sowie des entsprechenden Aufwandes nicht möglich. Durch den Hoch- oder Bandpass- bzw. die Schaltereinrichtung kann der Gleichstromanteil von dem zweiten Eingang des HF-Empfängers ferngehalten werden. Mittels der Schaltereinrichtung ist es beispielsweise möglich, für eine jeweilige Diagnose der HF-Antenne die Verbindung zu diesem zweiten Eingang des HF-Empfängers ganz zu unterbrechen. Bei der Verwendung eines den betreffenden Gleichstromanteil sperrenden Hoch- oder Bandpasses ist eine Umschaltung nicht erforderlich.

Der erste Antennenleiter kann direkt mit dem ersten Eingang des HF-Empfängers verbunden sein.

Der zweite Antennenleiter kann beispielsweise über einen einfachen Hochpass mit dem zweiten Anschluss des HF-Empfängers verbindbar sein, der wenigstens einen zwischen den zweiten Antennenleiter und den zweiten Eingang des HF-Empfängers in Serie geschalteten Kondensator umfasst. In diesem Fall ist der betreffende Aufwand auf ein Minimum reduziert. Wie bereits erwähnt, kann zur Unterbrechung des Gleichstrompfades jedoch beispielsweise auch ein Bandpass oder eine Schaltereinrichtung, mit der die betreffende Verbindung für Diagnosezwecke unterbrochen werden kann, vorgesehen sein.

Ist z.B. eine Schaltereinrichtung vorgesehen, so kann diese beispielsweise durch einen Transistorenschalter gebildet sein.

Der zweite Antennenleiter kann insbesondere an das mit der betreffenden Klemme der Spannungsversorgung verbundene Chassis eines Kraftfahrzeugs angeschlossen sein.

Die Antennenleiter können insbesondere zu einem Antennenkabel gehören. Ist als Antennenkabel beispielsweise ein Koaxialkabel vorgesehen, so kann der zweite Antennenleiter insbesondere durch den Außenleiter bzw. die Abschirmung dieses Koaxialkabels gebildet sein.

Der Antennenanschluss des Steuergeräts, über den der zweite Antennenleiter mit dem zweiten Eingang des HF-Empfängers und der Schaltungsanordnung des Steuergeräts verbindbar ist, besitzt vorzugsweise eine möglichst geringe Impedanz. Zur Erzielung der geringen Impedanz des Antennenanschlusses des Steuergeräts kann gegebenenfalls ein Anpassungsschaltkreis vorgesehen sein.

Das Steuergerät kann insbesondere einen Mikrocontroller umfassen. In diesem Fall ist die Schaltungsanordnung zweckmäßigerweise über diesen Mikrocontroller ansteuerbar.

Umfasst das Steuergerät einen Mikrocontroller, so kann der Antennenanschluss des Steuergeräts zur Überwachung des Antennen-Anschlusszustandes insbesondere mit einem Überwachungseingang dieses Mikrocontrollers verbunden sein. Dabei ist der Antennenanschluss des Steuergeräts vorzugsweise über wenigstens einen Serienwiderstand mit dem Überwachungseingang verbunden, um diesen vor Störungen zu schützen, wie sie beispielsweise an der Abschirmung des Antennenkabels auftreten können.

Mittels des Steuergeräts kann insbesondere der Gleichspannungspegel an dem mit dem zweiten Antennenleiter verbundenen Antennenanschluss überwacht werden.

Zur Überwachung des Antennen-Anschlusszustandes kann die Antenne beispielsweise mit einem kontinuierlichen Gleichstromsignal oder auch mit einem geschalteten Gleichstromsignal beaufschlagt werden.

Bei dem Steuergerät kann es sich insbesondere um das Steuergerät eines Kraftfahrzeugs handeln. Dabei kann es beispielsweise durch den Bordcomputer gebildet sein.

An dem überwachten Antennenanschluss des Steuergeräts liegen je nachdem, ob die Antenne korrekt angeschlossen ist oder nicht, unterschiedliche Pegel an. So kann beispielsweise dann ein hoher Pegel vorliegen, wenn die Antenne nicht angeschlossen ist, und bei korrekt angeschlossener Antenne ein niedriger Pegel vorliegen. Bei einem umgekehrt gewählten Anschluss der Antenne ergeben sich umgekehrte Pegel.

Bei der Spannungsversorgung kann es sich insbesondere um die Batterie des betreffenden Fahrzeugs handeln.

Bei dem Sicherungssystem für einen schlüssellosen Zugang kann es sich insbesondere um ein Fernbedienungssystem (RKE = Remote Keyless Entry) handeln. Es kann ein aktives System sein, bei dem der Benutzer zum Beispiel auf einen die Bedienungseinrichtung bildenden Schlüssel drücken muss, oder auch ein passives System sein, bei dem die betreffende Prozedur beispielsweise mit einer Betätigung eines Türgriffs des Fahrzeugs eingeleitet wird, woraufhin das Fahrzeug automatisch ein die Prozedur einleitendes Signal zum Schlüssel aussendet.

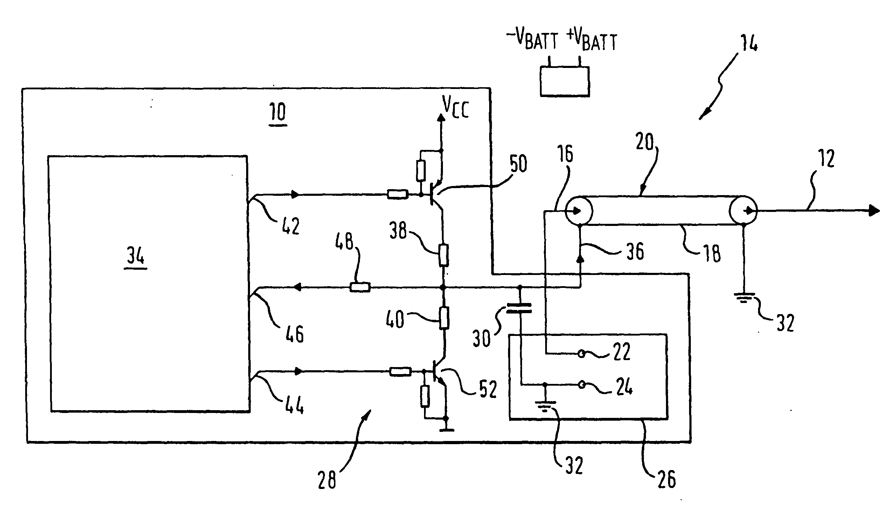

Die Erfindung wird im Folgenden anhand eines Ausführungsbeispiels unter Bezugnahme auf die Zeichnung näher beschrieben, wobei mit diesem Ausführungsbeispiel lediglich das Prinzip der erfindungsgemäßen Antennendiagnose verdeutlicht werden soll.

Die einzige Figur der Zeichnung zeigt in rein schematischer Darstellung einen ein Steuergerät 10 sowie eine Antenne 12 umfassenden Teil eines Sicherungssystems 14 für einen schlüssellosen Zugang. Dabei kann es sich insbesondere um ein Sicherungssystem 14 für Fahrzeuge, insbesondere Kraftfahrzeuge, handeln. Dieses Sicherungssystem 14 kann grundsätzlich auch mehrere Antennen 12 umfassen.

Das Sicherungssystem 14 kann also insbesondere ein einem Kraftfahrzeug zugeordnetes Steuergerät 10, eine Spannungsversorgung V_{Batt}, von der im vorliegenden Fall das Potential V_{cc} abgeleitet ist, sowie wenigstens eine mit dem Steuergerät 10 verbundene Antenne 12 zur Kommunikation mit einer tragbaren Bedienungseinrichtung über eine insbesondere bidirektionale Funkstrecke umfassen. Dabei kann beispielsweise eine tragbare Bedienungseinrichtung vorgesehen sein. Es ist jedoch auch eine Kommunikation zwischen fest installierten Komponenten denkbar.

Bei dem Sicherungssystem 14 für einen schlüssellosen Zugang kann es sich überdies insbesondere um ein Fernbedienungssystem (RKE = Remote Keyless Entry) handeln. Es kann ein aktives System sein, bei dem der Benutzer zum Beispiel auf einen die Bedienungseinrichtung bildenden Schlüssel drücken muss, oder auch ein passives System sein, bei dem die betreffende Prozedur beispielsweise mit einer Betätigung eines Türgriffs des Fahrzeugs eingeleitet wird, woraufhin das Fahrzeug automatisch ein die Prozedur einleitendes Signal zum Schlüssel aussendet.

Wie anhand der einzigen Figur zu erkennen ist, ist die Antenne 12 über zwei Antennenleiter 16, 18, hier beispielsweise die Leiter eines Antennenkabels 20, mit dem Steuergerät 10 verbunden. Bei dem Antennenkabel 20 kann es sich beispielsweise um ein Koaxialkabel handeln, durch dessen Außenleiter 18 eine Abschirmung gebildet wird.

Das Steuergerät 10 umfasst unter anderem einen zumindest zwei Eingänge 22, 24 aufweisenden HF-Empfänger 26. Dabei ist der erste Antennenleiter 16 mit dem ersten Eingang 22 des HF-Empfängers verbunden, wobei, wie in der einzigen Figur gezeigt, insbesondere eine direkte Verbindung zwischen dem ersten Antennenleiter 16 und diesem ersten Eingang 22 des HF-Empfängers 26 vorliegen kann.

Der zweite Antennenleiter 18 ist sowohl mit dem zweiten Eingang 24 des HF-Empfängers 26 als auch mit einer Schaltungsanordnung 28 des Steuergeräts 10 verbunden, über die die Antenne 12, das heißt hier der zweite Antennenleiter 18, mit einer Gleichspannung und/oder einem Gleichstrom beaufschlagbar ist. Dabei ist in die Verbindung zwischen dem zweiten Antennenleiter 18 und dem zweiten Eingang des HF-Empfängers 26 erfindungsgemäß ein Hoch- oder Bandpass und/oder eine Schaltereinrichtung eingesetzt, um den Gleichstromanteil vom zweiten Eingang 24 des HF-Empfängers 26 abzublocken. Im vorliegenden Fall ist ein einen Kondensator oder Koppelkondensator 30 umfassender Hochpass vorgesehen.

Der zweite Antennenleiter 18 ist an seinem der Antenne 12 zugewandten Ende mit Masse 32 bzw. mit einer betreffenden Klemme (zum Beispiel - V_{Batt}) der Spannungsversorgung V_{Batt} verbunden. Dabei kann der zweite Antennenleiter 18 insbesondere an das mit der betreffenden Klemme der Spannungsversorgung V_{Batt} verbundene Chassis eines Fahrzeugs bzw. Kraftfahrzeugs angeschlossen sein.

Ist als Antennenkabel 20 ein Koaxialkabel vorgesehen, so kann der zweite Antennenleiter 18 insbesondere durch den Außenleiter bzw. die Abschirmung des Koaxialkabels gebildet sein.

Im vorliegenden Fall ist auch der zweite Eingang 24 des HF-Empfängers 26 an Masse 32 angeschlossen.

Das Steuergerät 10 umfasst überdies Mittel für eine Gleichspannungs- und/oder Gleichstrommessung sowie Mittel zur Auswertung des Messergebnisses, um anhand dieses Messergebnisses auf den jeweiligen Anschlusszustand der Antenne 12 zu schließen. So kann das Steuergerät 10 außer der Schaltungsanordnung 28 insbesondere auch einen entsprechend programmierten Mikrocontroller 34 oder dergleichen umfassen.

Der Antennenanschluss 36 des Steuergeräts 10, über den der zweite Antennenleiter 18 mit dem zweiten Eingang 24 des HF-Empfängers 26 und der Schaltungsanordnung 28 des Steuergeräts 10 verbindbar ist, weist bevorzugt eine möglichst geringe Impedanz auf. Zur Erzielung der geringen Impedanz kann gegebenenfalls ein Anpassungsschaltkreis vorgesehen sein.

Die Schaltungsanordnung 28 umfasst einen Pull-up-Widerstand 38, über den der zweite Antennenleiter 18 zum Beispiel mit der anderen Klemme (+V_{Batt}) der Spannungsversorgung VBₐₜₜ verbindbar ist. Dabei kann an den Pull-up-Widerstand 38 grundsätzlich auch ein vom Potential der betreffenden Klemme abgeleitetes Potential angelegt werden (hier z.B. "V_{cc}").

Alternativ oder zusätzlich kann die Schaltungsanordnung 28 beispielsweise auch einen Pull-down-Widerstand 40 umfassen, über den der zweite Antennenleiter 18 z.B. mit Masse verbindbar ist.

Die Schaltungsanordnung 28 des Steuergeräts 10 ist im vorliegenden Fall über den ebenfalls dem Steuergerät 10 zugeordneten Mikrocontroller 34 ansteuerbar, was beispielsweise über Ausgänge 42, 44 des Mikrocontrollers 34 erfolgen kann.

Zur Überwachung des Antennen-Anschlusszustandes ist der Antennenanschluss 36 des Steuergeräts 10 im vorliegenden Fall mit einem Überwachungseingang 46 des Mikrocontrollers 34 verbunden. Um eine Beschädigung des Überwachungseingangs 46 durch beispielsweise auf der Abschirmung des Antennenkabels 20 erfolgende Störungen zu vermeiden, kann der Antennenanschluss 36 des Steuergeräts 10 über wenigstens einen Serienwiderstand 48 mit dem Überwachungseingang 46 des Mikrocontrollers 34 verbunden sein.

Der über den Antennenanschluss 36 an das Steuergerät 10 angeschlossene zweite Antennenleiter 18 kann also zum Beispiel über den Pull-up-Widerstand 38 mit der anderen Klemme (+V_{Batt}) der Spannungsversorgung V_{Batt} verbunden bzw. mit einem von dem betreffenden Potential abgeleiteten Potential V_{cc} beaufschlagt werden, um zu überprüfen, ob der zweite Antennenleiter 18 an Masse 32 angeschlossen ist. Im vorliegenden Fall kann diese Verbindung zum Beispiel über eine Transistorschaltung 50 hergestellt werden, die über den Ausgang 42 des Mikrocontrollers 34 des Steuergeräts 10 entsprechend ansteuerbar ist.

Mittels des Steuergeräts 10 kann nun beispielsweise der Gleichspannungspegel an dem Antennenanschluss 36 überwacht werden. Dabei kann der Antennenanschluss 36 zur Überwachung des Antennen-Anschlusszustandes z.B. mit dem gesonderten Überwachungseingang 46 des Mikrocontrollers 34, insbesondere über wenigstens einen Serienwiderstand 48, verbunden sein.

Der Antennenanschluss 36, über den der zweite Antennenleiter 18 zur Überwachung des Antennen-Anschlusszustandes an das Steuergerät 10 angeschlossen ist, besitzt vorzugsweise eine möglichst geringe Impedanz, wozu gegebenenfalls auch ein Anpassungsschaltkreis vorgesehen sein kann. Die niedrige Impedanz des Antennenanschlusses 36 ist erforderlich, um eine Beeinflussung durch den Pull-up-Widerstand 22 und den Eingang des Steuergeräts 10 zu minimieren.

Ist die Antenne 12 nicht korrekt angeschlossen, das heißt hier zum Beispiel nicht mit dem Chassis des Fahrzeugs und entsprechend nicht mit Masse 32 verbunden, so kann dies über das Steuergerät 10 dadurch festgestellt werden, dass am Überwachungseingang 46 ein hohes Potential anliegt, nachdem an dem Pull-up-Widerstand 38 kein Spannungsabfall auftritt und am Antennenanschluss 36 somit das Potential "+V_{Batt}" bzw. hier V_{cc} vorliegt.

Ist die Antenne 12 dagegen korrekt angeschlossen, so ergibt sich an dem Antennenanschluss 36 ein geringerer Pegel, was wieder über den Überwachungseingang 46 des Mikrocontrollers 34 erfasst wird.

Der Antennenanschluss 36 kann beispielsweise auch über einen Pull-down-Widerstand 30 z.B. mit Masse verbunden werden, um zu überprüfen, ob die Antenne 12 möglicherweise kurzgeschlossen bzw. zum Beispiel mit der Batterieklemme +V_{Batt} verbunden ist. Im vorliegenden Fall kann diese Verbindung zum Beispiel über eine Transistorschaltung 52 hergestellt werden, die beispielsweise über den Ausgang 44 des Mikrocontrollers 34 entsprechend ansteuerbar ist.

Während die Antenne 12 beim vorliegenden Ausführungsbeispiel zum Beispiel über den Pull-up-Widerstand 38 beispielsweise mit einem geschalteten Gleichstromsignal beaufschlagt wird, sind grundsätzlich z.B. auch solche Ausführungen denkbar, bei denen zur Überwachung des Antennen-Anschlusszustandes die Antenne 12 mit einem kontinuierlichen Gleichstromsignal beaufschlagt wird.

In dem Fall, dass die beiden mit dem Pull-up-Widerstand 38 bzw. dem Pull-down-Widerstand 40 gegebenen Diagnosemöglichkeiten in einem Schaltkreis verwirklicht sind, werden die beiden Widerstände 38, 40 über die zugeordneten Transistorschaltungen 50, 52 zweckmäßigerweise nacheinander geschaltet, um den Ruhestrom zu minimieren und ein klares, eindeutiges Diagnoseergebnis zu erhalten.

Bei der Auslegung des Antennenanschlusses 36 des Steuergeräts 10 ist gegebenenfalls zu berücksichtigen, dass es nicht möglich ist, den Innenleiter eines Koaxialkabels bzw. den ersten Antennenleiter eines betreffenden Antennenkabels zu trennen, ohne die Abschirmung bzw. den zweiten Antennenleiter zu trennen.

### Bezugszeichenliste

- 10: Steuergerät
- 12: Antenne
- 14: Sicherungssystem
- 16: erster Antennenleiter
- 18: zweiter Antennenleiter
- 20: Antennenkabel
- 22: erster Eingang
- 24: zweiter Eingang
- 26: HF-Empfänger
- 28: Schaltungsanordnung
- 30: Kondensator
- 32: Masse
- 34: Mikrocontroller
- 36: Antennenanschluss
- 38: Pull-up-Widerstand
- 40: Pull-down-Widerstand
- 42: Ausgang
- 44: Ausgang
- 46: Überwachungseingang
- 48: Serienwiderstand
- 50: Transistorschaltung
- 52: Transistorschaltung

## Patentansprüche

1. Sicherungssystem (14) für einen schlüssellosen Zugang, insbesondere für Kraftfahrzeuge, mit einem insbesondere einem Kraftfahrzeug zugeordneten Steuergerät (10), einer Spannungsversorgung (V_{Batt}) sowie wenigstens einer über zumindest zwei Antennenleiter (16, 18) mit dem Steuergerät (10) verbindbaren Antenne (12) zur Kommunikation mit einer Bedienungseinrichtung über eine insbesondere bidirektionale Funkstrecke, wobei das Steuergerät (10) einen zumindest zwei Eingänge (22, 24) aufweisenden HF-Empfänger (26) umfasst,
**dadurch gekennzeichnet,**
**dass** ein erster Antennenleiter (16) mit einem ersten Eingang (22) des HF-Empfängers (26) und ein zweiter Antennenleiter (18) sowohl über einen Hoch- oder Bandpass und/oder eine Schaltereinrichtung mit einem zweiten Eingang (24) des HF-Empfängers (26) als auch mit einer Schaltungsanordnung (28) des Steuergeräts (10) Verbunden ist, über die die Antenne (12) zur Überwachung des Antennen-Anschlusszustandes mit einer Gleichspannung und/oder einem Gleichstrom beaufschlagt wind, und dass das Steuergerät Mittel (28, 34) für eine Gleichspannungs- und/oder Gleichstrommessung sowie Mittel (28) zur Auswertung des Messergebnisses umfasst, um anhand dieses Messergebnisses auf den jeweiligen Anschlusszustand der Antenne (12) zu schließen, wobei der zweite Antennenleiter (18) an seinem der Antenne (12) zugewandten Ende mit Masse (32) bzw. mit einer Klemme der Spannungsversorgung (V_{Batt}) verbunden ist, und die Schaltungsanordnung (28) einen Pull-up-Widerstand (38), über den das mit der Schaltungsanordnung (28) verbundene Ende des zweiten Antennenleiters (18) mit der anderen Klemme der Spannungsversorgung (V_{Batt}) verbindbar ist, sowie einen Pull-down-Widerstand (40) umfasst, über den das mit der Schaltungsanordnung (28) verbundene Ende des zweiten Antennenleiters (18) mit Masse (32) verbindbar ist.

2. Sicherungssystem nach Anspruch 1,
**dadurch gekennzeichnet,**
**dass** der erste Antennenleiter (16) direkt mit dem ersten Eingang (22) des HF-Empfängers (26) verbindbar ist.

3. Sicherungssystem nach einem der vorhergehenden Ansprüche,
**dadurch gekennzeichnet,**
**dass** der zweite Antennenleiter (18) über einen Hochpass mit dem zweiten Anschluss (24) des HF-Empfängers (26) verbindbar ist, der wenigstens einen zwischen den zweiten Antennenleiter (18) und den zweiten Eingang (24) des HF-Empfängers (26) in Serie geschalteten Kondensator (30) umfasst.

4. Sicherungssystem nach einem der vorhergehenden Ansprüche,
**dadurch gekennzeichnet,**
**dass** die Schaltereinrichtung durch eine Transistorschaltung gebildet ist.

5. Sicherungssystem nach einem der vorangehenden Ansprüche,
**dadurch gekennzeichnet,**
**dass** der zweite Antennenleiter (18) an das mit der betreffenden Klemme der Spannungsversorgung (V_{Batt}) verbundene Chassis eines Kraftfahrzeuges angeschlossen ist.

6. Sicherungssystem nach einem der vorhergehenden Ansprüche,
**dadurch gekennzeichnet,**
**dass** die Antennenleiter (16, 18) zu einem Antennenkabel (20) gehören.

7. Sicherungssystem nach Anspruch 6,
**dadurch gekennzeichnet,**
**dass** als Antennenkabel (20) ein Koaxialkabel vorgesehen und der zweite Antennenleiter (18) vorzugsweise durch den Außenleiter des Koaxialkabels gebildet ist.

8. Sicherungssystem nach einem der vorhergehenden Ansprüche,
**dadurch gekennzeichnet,**
**dass** der Antennenanschluss (36) des Steuergeräts (10), über den der zweite Antennenleiter (18) mit dem zweiten Eingang (24) des HF-Empfängers (26) und der Schaltungsanordnung (28) des Steuergeräts (10) verbindbar ist, eine geringe Impedanz aufweist.

9. Sicherungssystem nach Anspruch 8,
**dadurch gekennzeichnet,**
**dass** zur Erzielung der geringen Impedanz des Antennenanschlusses (36) des Steuergeräts (10) ein Anpassungsschaltkreis vorgesehen ist.

10. Sicherungssystem nach einem der vorhergehenden Ansprüche,
**dadurch gekennzeichnet,**
**dass** das Steuergerät (10) einen Mikrokontroller (34) umfasst und die Schaltungsanordnung (28) über diesen Mikrokontroller (34) ansteuerbar ist.

11. Sicherungssystem nach einem der vorhergehenden Ansprüche,
**dadurch gekennzeichnet,**
**dass** das Steuergerät (10) einen Mikrokontroller (34) umfasst und der Antennenanschluss (36) des Steuergeräts (10) zur Überwachung des Antennen-Anschlusszustandes mit einem Überwachungseingang (46) des Mikrokontrollers (34) verbunden ist.

12. Sicherungssystem nach Anspruch 11,
**dadurch gekennzeichnet,**
**dass** der Antennenanschluss (36) des Steuergeräts (10) über wenigstens einen Serienwiderstand (48) mit dem Überwachungseingang (46) des Mikrokontrollers (34) verbunden ist.

13. Sicherungssystem nach einem der vorhergehenden Ansprüche,
**dadurch gekennzeichnet,**
**dass** mittels des Steuergeräts (10) insbesondere der Gleichspannungspegel an dem mit dem zweiten Antennenleiter (18) verbundenen Antennenanschluss (36) überwacht wird.

14. Sicherungssystem nach einem der vorhergehenden Ansprüche,
**dadurch gekennzeichnet,**
**dass** die Antenne (12) zur Überwachung des Antennen-Anschlusszustandes mit einem kontinuierlichen Gleichstromsignal beaufschlagbar ist.

15. Sicherungssystem nach einem der Ansprüche 1 bis 13,
**dadurch gekennzeichnet,**
**dass** die Antenne (12) zur Überwachung des Antennen-Anschlusszustandes mit einem geschalteten Gleichstromsignal beaufschlagbar ist.

## Claims

1. Securing system (14) for a keyless entry, in particular for motor vehicles, comprising a control device (10) which is in particular associated with a motor vehicle, a power supply (V_{Batt}) and at least one antenna (12) which can be connected to the control device (10) via at least two antenna leads (16, 18) for communication with an operating device via a radio link, in particular a bidirectional radio link, with the control device (10) comprising an RF receiver (26) having at least two inputs (22, 24),
**characterized in that**
a first antenna lead (16) is connected to a first input (22) of the RF receiver (26) and a second antenna lead (18) is connected both via a high pass or band pass filter and/or a switching device to a second input (24) of the RF receiver (26) and to a circuit arrangement (28) of the control device (10), via which the antenna (12) is charged with a direct voltage and/or a direct current for monitoring the antenna connection status; and **in that**
the control device comprises means (28, 34) for a direct voltage measurement and/or a direct current measurement as well as means (28) for evaluating the measurement result in order to be able to draw conclusions about the respective connection status of the antenna (12) on the basis of these measurement results, with the second antenna lead (18) being connected to ground (32) or to a terminal of the power supply (V_{Batt}) at its end facing the antenna (12) and the circuit arrangement (28) comprising a pull-up resistor (38) via which the end of the second antenna lead (18) connected to the circuit arrangement (28) can be connected to the other terminal of the power supply (V_{Batt}) and a pull-down resistor (40) via which the end of the second antenna lead (18) connected to the circuit arrangement (28) can be connected to ground (32)

2. Securing system in accordance with claim 1,
**characterized in that**
the first antenna lead (16) can be connected directly to the first input (22) of the RF receiver (26).

3. Securing system in accordance with any one of the preceding claims,
**characterized in that**
the second antenna lead (18) can be connected via a high pass filter to the second terminal (24) of the RF receiver (26), which comprises at least one capacitor (30) which is connected in series between the second antenna lead (18) and the second input (24) of the RF receiver (26).

4. Securing system in accordance with any one of the preceding claims
**characterized in that**,
the switching device is formed by a transistor circuit.

5. Securing system in accordance with any one of the preceding claims
**characterized in that**
the second antenna lead (18) is connected to the chassis of a motor vehicle which is connected to the relevant terminal of the power supply (V_{Batt}).

6. Securing system in accordance with any one of the preceding claims,
**characterized in that**
the antenna leads (16, 18) belong to an antenna cable (20).

7. Securing system in accordance with claim 6,
**characterized in that**
a coaxial cable is provided as the antenna cable (20) and the second antenna lead (18) is preferably formed by the outer conductor of the coaxial cable.

8. Securing system in accordance with any one of the preceding claims,
**characterized in that**
the antenna connection (36) of the control device (10), via which the second antenna lead (18) can be connected to the second input (24) of the RF receiver (26) and to the circuit arrangement (28) of the control device (10), has a low impedance.

9. Securing system in accordance with claim 8,
**characterized in that**
a matching circuit is provided for achieving the low impedance of the antenna connection (36) of the control device (10).

10. Securing system in accordance with any one of the preceding claims,
**characterized in that**
the control device (10) comprises a microcontroller (34); and **in that** the circuit arrangement (28) can be controlled via this microcontroller (34).

11. Securing system in accordance with any one of the preceding claims,
**characterized in that**
the control device (10) comprises a microcontroller (34) and the antenna connection (36) of the control device (10) is connected to a monitoring input (46) of the microcontroller (34) for monitoring the antenna connection status.

12. Securing system in accordance with claim 11,
**characterized in that**
the antenna connection (36) of the control device (10) is connected via at least one series resistor (48) to the monitoring input (46) of the microcontroller (34).

13. Securing system in accordance with one of the preceding claims,
**characterized in that**
in particular the direct voltage level at the antenna connection (36) which is connected to the second antenna lead (18) is monitored by means of the control device (10).

14. Securing system in accordance with one of the preceding claims,
**characterized in that**
the antenna (12) can be charged with a continuous direct current signal for monitoring the antenna connection status.

15. Securing system in accordance with any one of the claims 1 to 13,
**characterized in that**,
the antenna (12) can be charged with a switched direct current signal for monitoring the antenna connection status.

## Revendications

1. Système de sécurité (14) à accès sans clé, en particulier pour des véhicules automobiles, comprenant notamment un boîtier de commande (10) associé à un véhicule automobile, une source d'alimentation électrique (V_{Batt}) ainsi qu'au moins une antenne (12) pouvant être reliée au boîtier de commande (10) par l'intermédiaire d'au moins deux conducteurs d'antenne (16, 18), destinée à communiquer avec un dispositif d'actionnement par l'intermédiaire d'une voie hertzienne notamment bidirectionnelle, le boîtier de commande (10) comprenant un récepteur HF (26) ayant au moins deux entrées (22, 24),
**caractérisé en ce qu'**un premier conducteur d'antenne (16) est relié à une première entrée (22) du récepteur HF (26), et un deuxième conducteur d'antenne (18) est relié à la fois à une deuxième entrée (24) du récepteur HF (26), par l'intermédiaire d'un filtre passe-haut ou passe-bande et/ou d'un dispositif commutateur, et à un circuit de commutation (28) du boîtier de commande (10), circuit par l'intermédiaire duquel l'antenne (12) est soumise à l'application d'une tension de courant continu et/ou d'un courant continu afin de surveiller l'état de branchement de l'antenne,
et **en ce que** le boîtier de commande comporte des moyens (28, 34) de mesure d'une tension de courant continu et/ou de mesure d'un courant continu, ainsi que des moyens (28) d'analyse du résultat de la mesure, de manière à déterminer l'état de branchement correspondant de l'antenne (12) à partir de ce résultat de mesure, l'extrémité du deuxième conducteur d'antenne (18), qui est tournée vers l'antenne (12), étant reliée à la masse (32) ou à une borne de la source d'alimentation électrique (V_{Batt}),
et que le circuit de commutation (28) comprend une résistance de mise à l'alimentation (38), par l'intermédiaire de laquelle l'extrémité du deuxième conducteur d'antenne (18), qui est reliée au circuit de commutation (28), peut être reliée à l'autre borne de la source d'alimentation électrique (V_{Batt}), ainsi qu'une résistance de mise à la masse (40), par l'intermédiaire de laquelle l'extrémité du deuxième conducteur d'antenne (18), qui est reliée au circuit de commutation (28), peut être reliée à la masse (32).

2. Système de sécurité selon la revendication 1, **caractérisé en ce que** le premier conducteur d'antenne (16) peut être relié directement à la première entrée (22) du récepteur HF (26).

3. Système de sécurité selon l'une des revendications précédentes, **caractérisé en ce que** le deuxième conducteur d'antenne (18) peut être relié à la deuxième entrée (24) du récepteur HF (26) par l'intermédiaire d'un filtre passe-haut qui comprend au moins un condensateur (30) branché en série entre le deuxième conducteur d'antenne (18) et la deuxième entrée (24) du récepteur HF (26).

4. Système de sécurité selon l'une quelconque des revendications précédentes, **caractérisé en ce que** le dispositif commutateur est constitué par un circuit à transistor.

5. Système de sécurité selon l'une quelconque des revendications précédentes, **caractérisé en ce que** le deuxième conducteur d'antenne (18) est raccordé au châssis d'un véhicule automobile, qui est relié à la borne correspondante de la source d'alimentation électrique (V_{Batt}).

6. Système de sécurité selon l'une quelconque des revendications précédentes, **caractérisé en ce que** les conducteurs d'antenne (16, 18) font partie d'un câble d'antenne (20).

7. Système de sécurité selon la revendication 6, **caractérisé en ce que** le câble d'antenne (20) est prévu sous forme d'un câble coaxial, et que le deuxième conducteur d'antenne (18) est de préférence constitué par le conducteur extérieur du câble coaxial.

8. Système de sécurité selon l'une quelconque des revendications précédentes, **caractérisé en ce que** le raccord d'antenne (36) du boîtier de commande (10), par l'intermédiaire duquel le deuxième conducteur d'antenne (18) est relié à la seconde entrée (24) du récepteur HF (26) et au circuit de commutation (28) du boîtier de commande (10), présente une faible impédance.

9. Système de sécurité selon la revendication 8, **caractérisé en ce que**, pour atteindre une faible impédance du raccord d'antenne (36) du boîtier de commande (10), un circuit adaptateur est prévu.

10. Système de sécurité selon l'une quelconque des revendications précédentes, **caractérisé en ce que** le boîtier de commande (10) comprend un microcontrôleur (34), et que le circuit de commutation (28) peut être piloté via ce microcontrôleur (34).

11. Système de sécurité selon l'une quelconque des revendications précédentes, **caractérisé en ce que** le boîtier de commande (10) comprend un microcontrôleur (34), et que le raccord d'antenne (36) du boîtier de commande (10) est relié à une entrée de surveillance (46) du microcontrôleur (34) en vue de surveiller l'état de branchement de l'antenne.

12. Système de sécurité selon la revendication 11, **caractérisé en ce que** le raccord d'antenne (36) du boîtier de commande (10) est relié à l'entrée de surveillance (46) du microcontrôleur (34) par l'intermédiaire d'au moins une résistance série (48).

13. Système de sécurité selon l'une quelconque des revendications précédentes, **caractérisé en ce que** notamment le niveau de tension de courant continu présent au raccord d'antenne (36) relié au deuxième conducteur d'antenne (18) est surveillé au moyen du boîtier de commande (10).

14. Système de sécurité selon l'une quelconque des revendications précédentes, **caractérisé en ce qu'**un signal continu de courant continu peut être appliqué à l'antenne (12) en vue d'effectuer la surveillance de l'état de branchement de l'antenne.

15. Système de sécurité selon l'une des revendications 1 à 13, **caractérisé en ce qu'**un signal pulsé de courant continu peut être appliqué à l'antenne (12) en vue d'effectuer la surveillance de l'état de branchement de l'antenne.
